# EUROPÄISCHE PATENTSCHRIFT

(11) **EP 1 640 938 B1**
(45) Veröffentlichungstag und Bekanntmachung des Hinweises auf die Patenterteilung: **20.09.2006**
(21) Anmeldenummer: 04023045.0
(22) Anmeldetag: 28.09.2004
(51) Int. Cl.: G09B 21/02

(54) **Verfahren und Vorrichtung zum Stanzen und Prägen von Faltschachtelzuschnitten**
Method and system for cutting and embossing of folded box blanks
Procédé et dispositif pour estamper et empreindre des feuilles de boîtes pliables

(43) Veröffentlichungstag der Anmeldung: 29.03.2006
(73) Patentinhaber: Carl Edelmann GmbH & Co. KG, 89522 Heidenheim (DE)
(72) Erfinder: Kolb, Dieter, 89551 Königsbronn (DE); Fiur, Dietmar, 89520 Heidenheim (DE); Fuchs, Michael, 89561 Dischingen (DE)
(74) Vertreter: Körner, Ekkehard

(56) Entgegenhaltungen:
- EP-A- 0 818 393
- FR-A- 2 821 290
- JP-A- 9 048 439
- JP-A- 10 310 126
- JP-A- 2000 025 327

## Beschreibung

Die vorliegende Erfindung betrifft ein Verfahren sowie eine Vorrichtung zum Stanzen und Prägen von Faltschachtelzuschnitten, insbesondere zum Aufbringen von Aufschriften in Blindenschrift.

Deutsche und europäische Normen verlangen mehr und mehr das Aufbringen von Blindenschrift auf Verpackungen, insbesondere auf Verpackungen von Medikamenten. Diese erfolgt herkömmlicherweise durch Einprägen entsprechender Blindenschriftzeichen beispielsweise nach dem System Braille, die eine verbreitete Blindenschrift ist. Dabei werden das Ausstanzen des Zuschnitts der Verpackung aus dem Kartonnutzen und das Prägen des Zuschnitts in einem einzigen Arbeitsgang in einer Stanze bzw. Presse ausgeführt.

Die bei diesem Vorgang verwendeten Matrizen, nachfolgend Stanzmatrizen genannt, werden auf Positionsstifte aufgesteckt, die lösbar in entsprechenden Löchern in der Stanzform angeordnet sind, und dadurch passgenau in Bezug auf die Stanzform positioniert.

Die Übertragung der Stanzmatrizen auf die Gegenstanzplatte erfolgt mittels einer Andruckpresse. Damit die Stanzmatrizen auf der Gegenstanzplatte haften, werden sie zuvor mit Sprühkleber eingesprüht.

Anschließend werden die Gegenstanzplatte und die Stanzform im Stanzautomaten eingerichtet.

Wenn außer Faltlinien weitere Prägungen, nachfolgend Musterprägungen genannt, in der Oberfläche des Faltschachtelzuschnitts ausgebildet werden sollen, trägt die Stanzform eine entsprechende Prägematrize und ist an der Gegenstanzplatte eine entsprechende Prägepatrize passgenau anzubringen. Dazu wird die Patrize mit Hilfe von Fett an der Prägematrize angeheftet, wobei die Muster bildenden Erhebungen der Patrize in die Vertiefungen der Prägematrize eingreifen und dadurch für eine passgenaue gegenseitige Positionierung sorgen, und an ihrer Rückseite mit einem Doppelklebeband versehen. Im Stanzautomaten wird dann die Gegenstanzplatte auf die Stanzform abgesenkt und dadurch die Patrize an der Gegenstanzplatte angeheftet.

Besonders nachteilig bei dieser Vorgehendweise ist der Umstand, dass das Einrichten im Stanzautomaten erfolgen muss. Die hierfür benötigte Zeit verteuert den Arbeitsprozess erheblich. Zusätzlich müssen vor Beginn des Stanz- und Prägevorgangs die Prägematrize und die Prägepatrize wieder von Fett gesäubert werden, um die nachfolgend zu erzeugenden Zuschnitte nicht zu verschmutzen.

Aus der FR 2 821 290 A 1 ist eine Verfahrensweise bekannt, wie eine Prägematrize und eine Prägepatrize zum Prägen von Braille-Inschriften in Medikamenten-Faltschachteln an Stanzplatten zueinander passgenau ausgerichtet werden können. Dazu werden in einer ersten Phase jeweils drei Löcher in den Stanzplatten angebracht, um diese mit Hilfe von Zentrierstiften in der Richtung ihrer Ebene aneinander festlegen zu können. Die Zentrierstifte durchqueren beide Platten und sind auf diese Weise in der Lage, einen gemeinsamen Passer zu bilden, der später dazu benutzt wird, die Position der Vertiefungen in der Prägematrize und der Noppen in der Prägepatrize aufeinander auszurichten. In einer zweiten Phase werden mit Hilfe einer digital gesteuerten Fräse, deren Speicher die Positionsdaten aller herzustellenden Vertiefungen der Prägematrize und der vorgenannten Löcher enthält, in einer dünnen Platte aus Kunststoff die Vertiefungen und den Löchern in den Stanzplatten entsprechende Löcher hergestellt. Diese dünne Kunststoffplatte wird auf der ersten Stanzplatte in Bezug auf deren Löcher ausgerichtet, die zuvor hergestellt worden sind, wodurch die Position der Vertiefungen in der Prägematrize in Bezug auf die Löcher in der ersten Stanzplatte bestimmt ist. Diese Einstellung wird durch die Anbringung der Zentrierstifte in den Löchern hergestellt. Die dünne Kunststoffplatte wird dann mit der Stanzplatte verklebt. In einer dritten Phase wird eine auswechselbare Prägepatrize aus einem Kunststoffmaterial erstellt. Dazu wird mit Hilfe einer digital gesteuerten Fräse, deren Speicher die Positionsdaten der vorbenannten Löcher und der Noppen der Prägepatrize enthält, eine dünne Platte aus Kunststoffmaterial bearbeitet, die dann den Löchern in der zweiten Stanzplatte entsprechende Löcher als auch die Noppen der Prägepatrize aufweist, die der Braille-Inschrift entsprechen. Die Noppen werden durch Abtragen des Kunststoffmaterials um die Noppen herum ausgebildet. Man erhält ein auswechselbares Prägewerkzeug, bei dem die Position der Noppen gegenüber den genannten Löchern festgelegt ist. In einer vierten Phase wird dieses Prägewerkzeug an der zweiten Stanzplatte mit Hilfe der Zentrierstifte einjustiert.

Es versteht sich, dass das Prägewerkzeug an der zweiten Stanzplatte angeklebt werden muss, da die Zentrierstifte nach dem Einrichten der Braille-Prägepatrize wieder entfernt werden.

Der vorliegenden Erfindung liegt die Aufgabe zugrunde, ein Verfahren und eine Vorrichtung zum Stanzen und Prägen von Faltschachtelzuschnitten, insbesondere zum Aufbringen von Blindenschrift zu schaffen, mit dem bzw. mit der der Einrichtvorgang deutlich verkürzt werden kann.

Diese Aufgabe wird durch die Merkmale des Anspruchs 1 bzw. des Anspruchs 5 gelöst.

Bei dem erfindungsgemäßen Verfahren werden die folgenden Schritte durchgeführt:
- eine Stanzmatrize, die einen Ausschnitt aufweist, wird passgenau über einer Stanzform positioniert, die eine Prägematrize aufweist, wobei die Aussparung über der Prägematrize liegt,
- eine Prägepatrize wird an exakt vorgegebener Stelle über der Prägematrize in der Aussparung der Stanzmatrize und mit dieser formschlüssig an den Rändern dieser Aussparung verbunden positioniert,
- mit Haltemitteln wird die Stanzmatrize sodann zusammen mit der Prägepatrize von der Gegenstanzplatte aufgenommen,
- ein Kartonbogen wird zwischen die Stanzform und die mit Stanzmatrize und Pragepatrize versehene Gegenstanzplatte eingeführt, der Stanz- und Prägevorgang wird durchgeführt und der Faltschachtelzuschnitt mit Prägung wird ausgebracht.

An diesem Verfahren nehmen somit drei Ausrichtvorgänge teil: Im ersten Ausrichtvorgang wird die Prägematrize exakt auf der Stanzform ausgerichtet, im zweiten Ausrichtvorgang wird die Stanzmatrize exakt an der Stanzform ausgerichtet, und im dritten Ausrichtvorgang wird die Prägepatrize exakt an der Stanzmatrize ausgerichtet. Die Reihenfolge der Ausrichtvorgänge kann vertauscht sein.

Die Notwendigkeit, die Ausrichtprozesse ganz oder teilweise im Stanzautomaten durchzuführen, entfällt. Die Positionierung der Prägepatrize in dem Ausschnitt der Stanzmatrize kann vorteilhafterweise außerhalb der Maschine erfolgen.

Durch einfaches Anlegen der Prägepatrize an den Rand der Aussparung in der Stanzmatrize wird bereits eine exakte Positionierung bezüglich der Prägematrize erreicht, so dass danach unmittelbar über die Haltemittel die Stanzmatrize und die Prägepatrize von der Gegenstanzplatte aufgenommen werden können. Jedoch könnte es beim Arbeiten bei ungenügender Haftung der Prägepatrize an der Gegenstanzplatte zu einem Wandern der Prägepatrize auf der Gegenstanzplatte kommen, wenn die gegenseitigen Abmessungen von Aussparung und Prägepatrize dieses zulassen. Gemäß der Erfindung wird die exakte Positionierung der Prägepatrize in der Aussparung der Stanzmatrize durch eine formschlüssige Verbindung von Stanzmatrize und Prägepatrize sichergestellt, beispielsweise durch wenigstens eine Kerbzahn-Verbindung, und besonders vorteilhaft wird dies unterstützt durch wenigstens je eine Kerbzahn-Verbindung an drei Seiten der Patrize.

Nachteilig ist im Stand der Technik weiterhin, dass zum Wechsel der Prägepatrizen die abzunehmende Prägepatrize und das sie haltende Klebeband mühsam von der Gegenstanzplatte abgeschabt werden müssen, was bei zunehmend häufigerem Patrizenwechsel zu immer größeren Nachteilen führt.

Besonders vorteilhaft ist gemäß der vorliegenden Erfindung, wenn das Halten der Prägepatrizen an der Gegenstanzplatte durch magnetische Haltemittel erfolgt.

Schließlich umfasst die vorliegende Erfindung auch eine Prägepatrize für eine Vorrichtung zum Prägen von Faltschachtelzuschnitten, insbesondere zum Aufbringen von Blindenschrift, mit einer Kunststoffplatte, an deren einen Seite die Prägevorsprünge oder -noppen vorgesehen sind. Erfindungsgemäß zeichnet sich die Prägepatrize dadurch aus, dass die Kunststoffplatte mit magnetisierbaren Einrichtungen versehen ist. Beispielsweise ist an der den Prägevorsprüngen oder -noppen abgewandten Seite der Kunststoffplatte eine Magnetschicht vorhanden oder ist das Kunststoffmaterial mit ferromagnetischem Material durchsetzt. Mit Hilfe dieser Magnetschicht oder dem ferromagnetischen Material kann die Prägepatrize an der metallischen Gegenstanzlatte gehalten werden, wobei sich ein besonderer Vorteil beim Umrüsten der Vorrichtung von einer Prägepatrize zur nächsten ergibt, da diese nur einfach von der Gegenstanzplatte abgezogen werden muss. Die Umrüstung kann somit innerhalb weniger Minuten, wenn nicht gar Sekunden, erfolgen. Bisherige Umrüstzeiten belaufen sich auf mehrere Minuten pro Umrüstung.

Weiterhin weist die erfindungsgemäße Patrize Mittel zur exakten Positionierung vorzugsweise an ihren Seitenrändern auf.

Weitere Einzelheiten der Merkmale und Vorteile der Erfindung ergeben sich aus der nachfolgenden Beschreibung unter Bezugnahme auf die Zeichnungen. Darin zeigt:
- Fig. 1: eine Draufsicht auf eine Stanzform mit Prägematrize, wie dies dem Stand der Technik bekannt ist,
- Fig. 2: eine Ansicht einer Stanzmatrize mit Aussparung und einer darin exakt angeordneten Prägepatrize,
- Fig. 3: die Prägematrize, und
- Fig. 4: eine erfindungsgemäße Prägepatrize.

In den Zeichnungen sind gleiche Elemente mit gleichen Bezugsziffern bezeichnet.

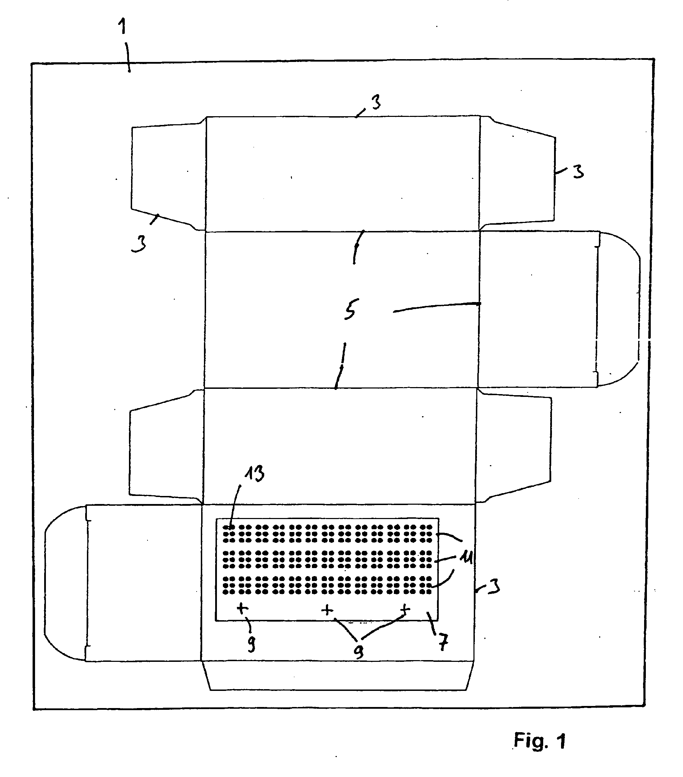

In Fig. 1 ist eine Stanzform 1 schematisch dargestellt, mit Messern 3, die entlang der gesamten Außenkontur vorgesehen sind, wie allgemein bekannt. Stegartige Vorsprünge 5 dienen zur entsprechenden Prägung der Faltlinien zum Biegen der einzelnen Flächen des Rumpfes und der Laschen der Verpackung.

Eine Prägematrize 7 ist mit drei symbolisch angedeuteten Stiften 9 an der Stanzform 1 fixiert. Die Prägematrize 7 kann aus Stahl, Aluminium oder Messing bestehen. Sie kann einteilig oder in mehreren Schichten gleichen oder unterschiedlichen Werkstoffs sein. In der dargestellten Ausführungsform gemäß Fig. 1 weist die Prägematrize 7 drei Reihen 11 von Buchstaben 13 einer Blindenschrift, beispielsweise nach Braille-System auf.

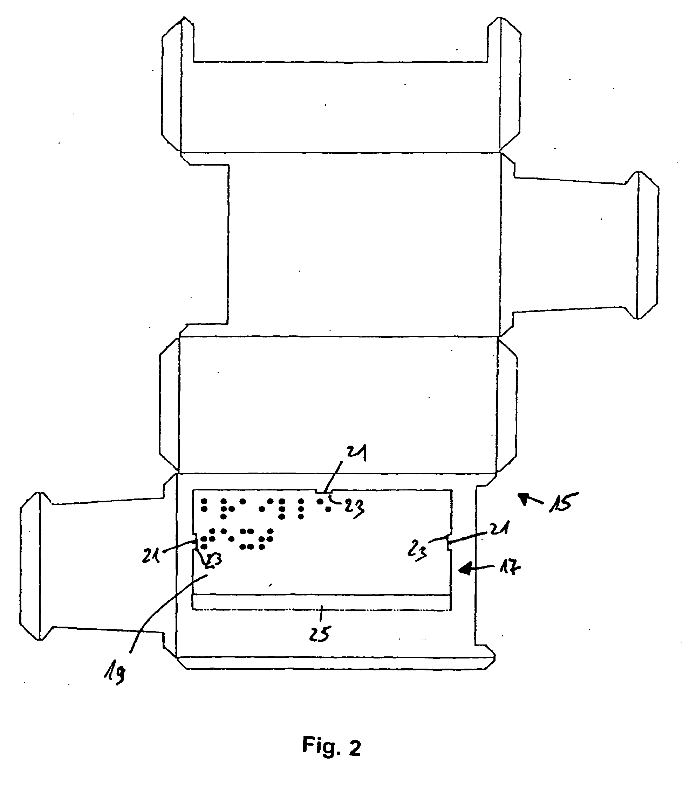

In Fig. 2 ist eine Stanzmatrize 15 dargestellt, die, wie unschwer ersichtlich, exakt über die Stanzform der Fig. 1 passt.

In der Stanzmatrize 15 ist eine Aussparung 17 vorgesehen, in der bereits eine Prägepatrize 19 mit Braille-Text angeordnet ist. An den drei Seiten der Prägepatrize ist jeweils eine Kerbzahn-Verbindung zwischen Aussparung 17 und Prägepatrize 19 dadurch geschaffen, dass von den Seitenrändern der Aussparung 17 vorstehende Zähne 21 mit entsprechend genauen Kerben 23 an der Prägepatrize 19 zusammenwirken. Dabei sind die Ränder der Aussparung 17 so dimensioniert, dass sie eine exakte Positionierung der Prägepatrize 19 über der darunterliegenden Prägematrize 7 ermöglichen.

Zum Herausnehmen der Prägeptrize 19 ist im Beispielsfall eine streifenförmige Öffnung 25 vorgesehen, die das Ansetzen eines Werkzeugs möglich macht, ohne die Stanzmatrize 15 zu verletzen. Alternativ kann beispielsweise eine Öffnung in einer Ecke vorgesehen sein.

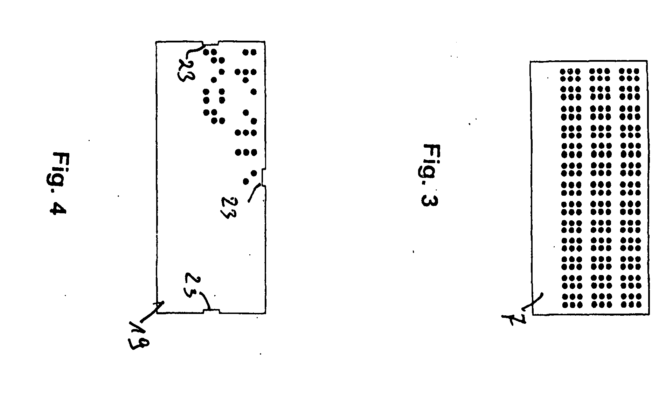

Zur Vervollständigung sind in der Fig. 3 die Prägematrize 7 dargestellt und in Fig. 4 eine erfindungsgemäße Prägepatrize 19, wie sie in Fig. 2 in der Stanzmatrize 15 eingesetzt ist.

Die vorliegende Erfindung ist nicht auf die dargestellten Ausführungsbeispiele beschränkt. Beispielsweise kann auch in der Gegenstanzplatte ein magnetisches Feld erzeugt werden, mit dem dann ein entsprechend magnetisierte oder metallisierte Prägepatrize gehalten werden kann. Dieses beispielsweise temporär elektrisch erzeugtes Magnetfeld kann beim Wechsel der Prägeptrize abgeschaltet werden, so dass sich die Prägepatrize von selbst von der Gegenstanzplatte durch Schwerkraft löst.

Alternativ kann bei bestimmten Stanzverfahren auf die Stanzmatrize und die Übertragung der Stanzmatrize mittels Haltemittel auf die Gegenstanzplatte verzichtet werden.ln diesen Fällen wird eine so genannte Stanzrillplatte eingesetzt, wobei Vertiefungen bereits in der Metalloberfläche eingefräst sind. Diese Vertiefungen dienen dazu, ähnlich wie bei der Stanzmatrize, mittels der in der Stanzform enthaltenen stegartigen Vorsprünge entsprechende Prägungen der Linien zum Biegen einzelner Flächen vorzunehmen.

Die passgenaue Aussparung zur Aufnahme der Patrize mittels Kerbzahnverbindung muss im Falle der Stanzrillplatte direkt in die Metalloberfläche gefräst werden.

Mit der vorliegenden Erfindung wird sowohl eine große Rüstzeitreduzierung beim Erstrüsten der Maschine mit einer Prägepatrize erreicht, als auch eine erhebliche Zeitersparnis beim Umrüsten der Stanze oder Presse, d. h. beim Auswechseln der Patrizen.

Vorangehend ist die Erfindung an einem Beispiel erläutert worden, bei dem auf der Stanzform eine Prägematrize angeordnet ist. Es versteht sich, dass wenn die Prägungen am Faltschachtelzuschnitt nicht erhaben (positiv, wie bei Blindenschrift üblich), sondern negativ sein sollen, auf der Stanzform eine Prägepatrize angeordnet sein muss, während die Gegenstanzplatte eine dazu passende Prägematrize trägt. Die Erfindung ist also nicht auf Ausführungsformen der erstgenannten Art beschränkt, sondern umfasst auch solche der zuletzt genannten Art als deren Äquivalent.

## Patentansprüche

1. Verfahren zum Stanzen und Prägen von Faltschachtelzuschnitten, insbesondere zum Aufbringen von Blindenschrift, bei dem die folgenden Schritte durchgeführt werden:
- eine Stanzmatrize (15) wird passgenau über einer Stanzform (1) positioniert, die eine Prägematrize (7) trägt,
- eine Prägepatrize (19) wird an exakt vorgegebener Stelle über der Prägematrize (7) in einer Aussparung (17) der Stanzmatrize (15) formschlüssig festgelegt,
- mit Haltemitteln wird die Stanzmatrize (15) zusammen mit der Prägepatrize (19) von einer Gegenstanzplatte aufgenommen,
- ein zu prägender und zu stanzender Kartonbogen wird zwischen die Stanzform (1) und die mit der Stanzmatrize (15) und der Prägepatrize (19) versehene Gegenstanzplatte eingeführt, der Stanz- und Prägevorgang wird durchgeführt und der fertige Faltschachtelzuschnitt mit Prägung wird ausgeworfen.

2. Verfahren nach Anspruch 1, **dadurch gekennzeichnet, dass** die exakte Positionierung der Prägepatrize (19) in der Stanzmatrize (15) mit wenigstens einer Kerbzahn-Verbindung (21,23) erfolgt.

3. Verfahren nach Anspruch 2, **dadurch gekennzeichnet, dass** die exakte Positionierung der Prägepatrize (19) in der Stanzmatrize (15) durch wenigstens je eine Kerbzahn-Verbindung (21,23) an drei Seiten der Prägepatrize (19) erfolgt.

4. Verfahren nach einem der Ansprüche 1 bis 3, **dadurch gekennzeichnet, dass** das Halten der Prägepatrize (19) an der Gegenstanzplatte durch magnetische Haltemittel erfolgt.

5. Vorrichtung zum Stanzen und Prägen von Faltschachtelzuschnitten, insbesondere zum Aufbringen von Blindenschrift auf denselben,
mit einer Stanzform (1), die sowohl Schneidmesser (3) als auch Kantenprofilierer bzw. Rippen (5) sowie eine Prägematrize (7) aufweist,
mit einer Stanzmatrize (15), die eine rahmenförmige Aussparung (17) aufweist, in die eine zu der Prägematrize (7) passende Prägepatrize (19) einlegbar ist, wobei die rahmenförmige Aussparung (17) im Bereich der Prägematrize (7) vorgesehen ist, und
mit Mitteln zum Halten der Prägepatrize (19) an einer Gegenstanzplatte,
**dadurch gekennzeichnet**
**dass** sowohl an der Stanzmatrize (15) als auch an der rägepatrize (19) Mittel zur exakten Positionierung (21,23) der Prägepatrize (19) in der Aussparung (17) und damit gegenüber der Prägematrize (7) vorgesehen ist.

6. Vorrichtung nach Anspruch 5, **dadurch gekennzeichnet, dass** die Mittel zur exakten Positionierung (21, 23) der Prägepatrize (19) an wenigstens einer Seite der Prägepatrize (19) und der Aussparung (17) angeordnet sind.

7. Vorrichtung nach Anspruch 6, **dadurch gekennzeichnet, dass** die Mittel zur exakten Positionierung (21, 23) der Prägepatrize (19) an drei Seiten der Prägepatrize (19) und der Aussparung (17) angeordnet sind.

8. Vorrichtung nach einem der Ansprüche 5 bis 7, **dadurch gekennzeichnet, dass** als Mittel zur exakten Positionierung der Patrize eine Kerbzahn-Verbindung (21, 23) dient.

9. Vorrichtung nach einem der Ansprüche 5 bis 8, **dadurch gekennzeichnet, dass** die Mittel zum Halten der Prägepatrize (19) magnetische Mittel sind.

10. Patrize für eine Vorrichtung zum Prägen von Faltschachtelzuschnitten, insbesondere zum Aufbringen von Blindenschrift darauf, mit einer Kunststoffplatte an deren einen Seite Prägevorpsrünge oder -noppen vorgesehen sind, **dadurch gekennzeichnet, dass** an der anderen Seite der Kunststoffplatte eine Magnetschicht vorhanden ist.

11. Patrize für eine Vorrichtung zum Prägen von Faltschachtelzuschnitten, insbesondere zum Aufbringen von Blindenschrift darauf, mit einer Kunststoffplatte, an deren einer Seite die Prägevorsprünge oder -noppen vorgesehen sind, **dadurch gekennzeichnet, dass** die Kunststoffplatte einen metallischen oder magnetischen Zuschlagstoff enthält.

12. Patrize nach Anspruch 10 oder 11, **dadurch gekennzeichnet, dass** sie Mittel (23) zur exakten Positionierung der Patrize (19) vorzugsweise an drei Rändern aufweist.

## Claims

1. A method of cutting and embossing folded box blanks, primarily for applying braille imprints, comprising the following steps:
- an embossing die counterpart (15) is accurately positioned above a cutting die (1) bearing an embossing female part (7),
an embossing male part (19) is positively affixed in a recess (17) of the embossing die counterpart (15) in an exactly predefined position above the embossing female part (7),
the embossing die counterpart (15) along with the embossing male part (19) are received from a cutting die counterpart by the aid of fixing means,
a cardboard blank to be embossed and to be cut is inserted between the cutting die (1) and the cutting die counterpart provided with the embossing counterpart (15) and the embossing male part (19), the cutting and embossing step is performed and the finished folded box blank including an embossing is ejected.

2. The method of claim 1, **characterized in that** the exact positioning of the embossing male part (19) within the embossing die counterpart (15) is effected by means of at least one notch joint (21, 23).

3. The method of claim 2, **characterized in that** the exact positioning of the embossing male part (19) within the embossing die counterpart (15) is effected by means of at least one notch joint (21, 23) at each of three sides of the embossing male part (19).

4. The method of one of claims 1 to 3, **characterized in that** holding the embossing male part (19) at the cutting die counterpart is effected by magnetic holding means..

5. An apparatus for cutting and embossing of folded box blanks, in particular for applying braille imprints thereon, comprising:
a cutting die (1) which comprises cutting knives (3) as well as edge profilers and ribs (5), respectively, and an embossing female part,
an embossing die counterpart (15) which comprises a frame-like recess (17) into which an embossing male part (19) matched to the embossing female part (7) is insertable, said frame-like recess (17) being located in the area of the embossing male part (7), and
means for holding the embossing male part (19) at a cutting die counterpart,
**characterized in that**
means (21, 23) are provided at the embossing die counterpart (15) as well as at the embossing male part (19) for an exact positioning of the embossing male part (19) within the recess (17) and thereby with respect to the embossing female part (7).

6. The apparatus of claim 5, **characterized in that** the means (21, 23) for the exact positioning of the embossing male part (19) are disposed at at least one side of each of the embossing male part (19) and the recess (17).

7. The apparatus of claim 6, **characterized in that** the means (21, 23) for the exact positioning of the embossing male part (19) are disposed at three sides of each of the embossing male part (19) and the recess (17).

8. The apparatus of one of claims 5 to 7, **characterized in that** said means for the exact positioning is formed by a notch joint (21, 23).

9. The apparatus of one of claims 5 to 8, **characterized in that** said means for holding the embossing male part (19) are magnetic means.

10. A male part for an apparatus for embossing of folded box blanks, in particular for applying braille imprints thereon, comprising a resin board at one face thereof embossing projections or nipples are provided, **characterized in that** the other face of said resin board is provided with a magnetic layer.

11. A male part for an apparatus for embossing of folded box blanks, in particular for applying braille imprints thereon, comprising a resin board at one face thereof embossing projections or nipples are provided, **characterized in that** the resin board comprises a metallic or magnetic aggregate.

12. The male part of claim 10 or 11, **characterized in that** it comprises means (23) for the exact positioning of the male part (19), which are disposed preferably at three edges.

## Revendications

1. Procédé pour découper et gaufrer des flans de boîtes à plier, en particulier pour apposer de l'écriture Braille, dans lequel sont réalisées les étapes suivantes :
- une contre-partie de gaufrage (15) est positionnée précisément sur une forme de découpe (1) qui porte un cliché de gaufrage (7),
- un cliché d'estampage (19) est placé, par correspondance de formes, à un emplacement précisément prédéfini sur le cliché de gaufrage (7) dans un évidement (17) de la contre-partie de gaufrage (15),
- la contre-partie de gaufrage (15) est logée conjointement avec le cliché d'estampage (19) dans une contre-partie de découpe, par des moyens de maintien,
- un flan de carton à gaufrer et à découper est introduit entre la forme de découpe (1) et la contre-partie de découpe munie de la contre-partie de gaufrage (15) et du cliché d'estampage (19), l'opération de découpe et de gaufrage est exécutée et le flan de boîte à plier fini, gaufré, est éjecté.

2. Procédé selon la revendication 1, **caractérisé en ce que** le positionnement exact du cliché d'estampage (19) dans la contre-partie de gaufrage (15) s'effectue par au moins une liaison par encoche (21, 23).

3. Procédé selon la revendication 2, **caractérisé en ce que** le positionnement exact du cliché d'estampage (19) dans la contre-partie de gaufrage (15) s'effectue par au moins chaque fois une liaison par encoche (21, 23) sur trois côtés du cliché d'estampage (19).

4. Procédé selon l'une des revendications 1 à 3, **caractérisé en ce que** le maintien du cliché d'estampage (19) sur la contre-partie de découpe s'effectue par des moyens de maintien magnétiques.

5. Dispositif pour découper et gaufrer des flans de boîtes à plier, en particulier pour apposer dessus de l'écriture Braille,
comportant une forme de découpe (1) qui présente aussi bien des lames de coupe (3) que des éléments de profilage de bords ou nervures (5) ainsi qu'un cliché de gaufrage (7),
comportant une contre-partie de gaufrage (15) qui présente un évidement (17) en forme de cadre, dans lequel un cliché d'estampage (19) adapté au cliché de gaufrage (7) peut être mis en place, l'évidement (17) en forme de cadre étant prévu dans le secteur du cliché de gaufrage (7),
et
comportant des moyens pour maintenir le cliché d'estampage (19) sur une contre-partie de découpe,
**caractérisé en ce**
**que** des moyens de positionnement exact (21, 23) du cliché d'estampage (19) dans l'évidement (17) et ainsi en vis-à-vis du cliché de gaufrage (7) sont prévus aussi bien sur la contre-partie de gaufrage (15) que sur le cliché d'estampage (19).

6. Dispositif selon la revendication 5, **caractérisé en ce que** les moyens de positionnement exact (21, 23) du cliché d'estampage (19) sont disposés sur au moins un côté du cliché d'estampage (19) et de l'évidement (17).

7. Dispositif selon la revendication 6, **caractérisé en ce que** les moyens de positionnement exact (21, 23) du cliché d'estampage (19) sont disposés sur trois côtés du cliché d'estampage (19) et de l'évidement (17).

8. Dispositif selon l'une des revendications 5 à 7, **caractérisé en ce qu'**une liaison par encoche (21, 23) sert de moyens de positionnement exact du cliché d'estampage.

9. Dispositif selon l'une des revendications 5 à 8, **caractérisé en ce que** les moyens de maintien du cliché d'estampage (19) sont des moyens magnétiques.

10. Cliché d'estampage destiné à un dispositif pour découper et gaufrer des flans de boîtes à plier, en particulier pour apposer dessus de l'écriture Braille, comportant une plaque de matière synthétique sur l'un des côtés de laquelle sont prévus des saillants ou ergots d'estampage, **caractérisé en ce qu'**une couche magnétique est présente sur l'autre côté de la plaque en matière synthétique.

11. Cliché d'estampage destiné à un dispositif pour découper et gaufrer des flans de boîtes à plier, en particulier pour apposer dessus de l'écriture Braille, comportant une plaque de matière synthétique sur l'un des côtés de laquelle sont prévus des saillies ou ergots d'estampage, **caractérisé en ce que** la plaque en matière synthétique contient une charge métallique ou magnétique.

12. Cliché d'estampage selon la revendication 10 ou 11, **caractérisé en ce qu'**il présente, de préférence sur trois bords, des moyens (23) de positionnement exact du cliché d'estampage.
